# EUROPEAN PATENT SPECIFICATION

(11) **EP 3 305 672 B1**
(45) Date of publication and mention of the grant of the patent: **04.05.2022**
(21) Application number: 16799677.6
(22) Date of filing: 01.04.2016
(51) Int. Cl.: G05B 19/409, G05B 19/418, B65B 57/00, B65B 9/207, G06F 3/0484, G06F 3/0488

(54) **PRODUCTION LINE CONFIGURATION DEVICE**
PRODUKTIONSLINIENKONFIGURATIONSVORRICHTUNG
DISPOSITIF DE CONFIGURATION DE LIGNE DE PRODUCTION

(30) Priority: 26.05.2015 JP 2015106808
(43) Date of publication of application: 11.04.2018
(73) Proprietor: Ishida Co., Ltd., Kyoto-shi, Kyoto 606-8392 (JP)
(72) Inventor: TAKAYAMA, Motoki, Ritto-shi Shiga 520-3026 (JP); ICHIKAWA, Makoto, Ritto-shi Shiga 520-3026 (JP); KAWANISHI, Norio, Ritto-shi Shiga 520-3026 (JP)
(74) Representative: Gill Jennings & Every LLP
(86) International application number: PCT/JP2016/060970
(87) International publication number: WO 2016/189969

(56) References cited:
- WO-A1-2008/136246
- WO-A1-2015/041332
- WO-A2-2012/155167
- JP-A- H0 833 054
- JP-A- 2005 082 086
- JP-A- 2010 235 159
- JP-A- 2012 168 939
- JP-A- 2012 256 134
- JP-U- H0 661 709

## Description

### TECHNICAL FIELD

The present invention relates to a production line configuration apparatus.

### BACKGROUND ART

A packaging apparatus, a weighing apparatus, a printing apparatus, a label application apparatus, a case forming apparatus, and a box packing apparatus and the like have been known as production line configuration apparatuses which configure a production line performing the production of a product and perform operations related to the production of a product in a plant or the like. For example, Patent Document 1 (Japanese Laid-open Patent Publication No. 2006-206153) discloses a filling and packaging machine provided with a touch panel setting various set values as one example of a production line configuration apparatus.

### SUMMARY OF INVENTION

### <Technical Problem>

At a production line configuration apparatus provided with a touch panel, a user manipulates buttons displayed on the touch panel to adjust various set values. For example, at a packaging machine provided with a touch panel, in the case where the user corrects misalignment of a seam of a film sealed by a longitudinal sealing mechanism, the user adjusts a set value set in an adjustment part adjusting the meandering of the film. In this case, for example, after the user stops an operation of a transverse sealing mechanism, the user carries out the operation by the longitudinal sealing mechanism. Then, while the user observes the seam of the film longitudinally sealed, the user adjusts the set value.

However, since, on the production line configuration apparatus, the touch panel is generally disposed at a position separated from a place where an operation related to the production of a product is performed, in the case where the user manipulates the touch panel, the user needs to take his or her eyes off the place where the operation related to the production of a product is performed to check the position of a button in the touch panel.

For example, since, on a packaging machine, a touch panel is disposed at a position separated from a place where a film longitudinally sealed is conveyed, in the case where the user manipulates the touch panel, the user needs to take his or her eyes off a location longitudinally sealed to check the position of the button in the touch panel. Since the user needs to move his or her gaze at each manipulation on the touch panel, a process for correcting misalignment of a seam of the film is very complicated to the user. Note that similar problems occur in the case where there is a need to move his or her gaze at each manipulation on the touch panel such as not only the case where misalignment of a seam of the film is corrected but also the case where a print position for printing product information on a label is corrected.

JP2012256134A describes how various devices used in a production line of a bagged commodity are connected with plural operation display units via a network. Each operation display unit communicates with a plurality of the devices under the control of the own unit to display an operating state of each device under its control. The operation display unit has a function to transmit operating conditions for each device and an operation command to each device. The operation display unit includes mail communication means for inputting a message, transmitting the message to a designated address, and receiving a message whose destination is the own unit. A touch screen is used to input certain information.

WO 2015/041332 A1 discloses controlling the operation of a robot via flick and drag operations on a touch screen.

An object of the present invention is to provide a production line configuration apparatus reducing complication of a process performed via a touch panel.

### <Solution to Problem>

This object is achieved as set out in the appended independent claims, that define the invention.

In a production line configuration apparatus according to a first embodiment of the present invention, the touch manipulation includes a flick manipulation. The change part changes the set value on the basis of a sliding direction of a finger of the user during the flick manipulation that is the method for the manipulation.

In the production line configuration apparatus according to the first embodiment of the present invention, the change part changes the set value on the basis of the sliding direction of the finger of the user. Therefore, the user is able to easily adjust the set value just by changing the sliding direction of the finger.

In a production line configuration apparatus according to a second embodiment of the present invention, the change part changes the set value to a value which is different in the case where the sliding direction is a left direction versus in the case where the sliding direction is a right direction.

In the production line configuration apparatus according to the second embodiment of the present invention, the change part changes the set value to a different value in accordance with whether the sliding direction is either the left or right direction. Therefore, the user is able to easily adjust the set value just by sliding the finger either leftwardly or rightwardly.

In a production line configuration apparatus according to a third embodiment of the present invention, the change part changes the set value to a value which is different in the case where the sliding direction is an up direction versus in the case where the sliding direction is a down direction.

In the production line configuration apparatus according to the third embodiment of the present invention, the change part changes the set value to a different value in accordance with whether the sliding direction is either the up or down direction. Therefore, the user is able to easily adjust the set value just by sliding the finger either upwardly or downwardly.

In a production line configuration apparatus according to a fourth embodiment of the present invention, the touch manipulation includes a tap manipulation. The change part changes the set value on the basis of the number of times for a preset period of time of the tap manipulation that is the method for the manipulation.

In the production line configuration apparatus according to the fourth embodiment of the present invention, the change part changes the set value on the basis of the number of times of the tap manipulation. Therefore, the user is able to easily adjust the set value just by changing the number of times of the tap manipulation.

In a production line configuration apparatus according to a fifth embodiment of the present invention, the change part changes the set value on the basis of the number of portions of a touch panel simultaneously depressed that is the method for the manipulation by the user.

In the production line configuration apparatus according to the fifth embodiment of the present invention, the change part changes the set value on the basis of the number of the portions of the touch panel simultaneously depressed by the user. Therefore, the user is able to easily adjust the set value just by changing the number of fingers depressing the touch panel.

### <Advantageous Effects of Invention>

In the production line configuration apparatus according to the present invention, since the change part changes the set value in the operation part on the basis of the method for the touch manipulation, the user is able to manipulate the manipulation part without seeing the touch panel. Accordingly, complication of a process performed via the touch panel is able to be reduced.

### BRIEF DESCRIPTION OF DRAWINGS

FIG. 1 is a perspective view of a bag making and packaging machine according to one embodiment of the present invention.
FIG. 2 is a perspective view showing a schematic structure of a bag making and packaging unit.
FIG. 3 is a functional block diagram of the bag making and packaging machine in FIG. 1.
FIG. 4 illustrates one example of corresponding information.
FIG. 5 illustrates one example of a manipulation screen.
FIG. 6 is a flowchart of a process for correcting misalignment of a longitudinal seal.
FIG 7 illustrates another example of corresponding information.

### DESCRIPTION OF EMBODIMENT

One embodiment of a production line configuration apparatus of the present invention will be described below. Note that the embodiment below is a specific example and is not intended to limit the invention according to the claims.

### (1) Structure of Bag Making and Packaging Machine

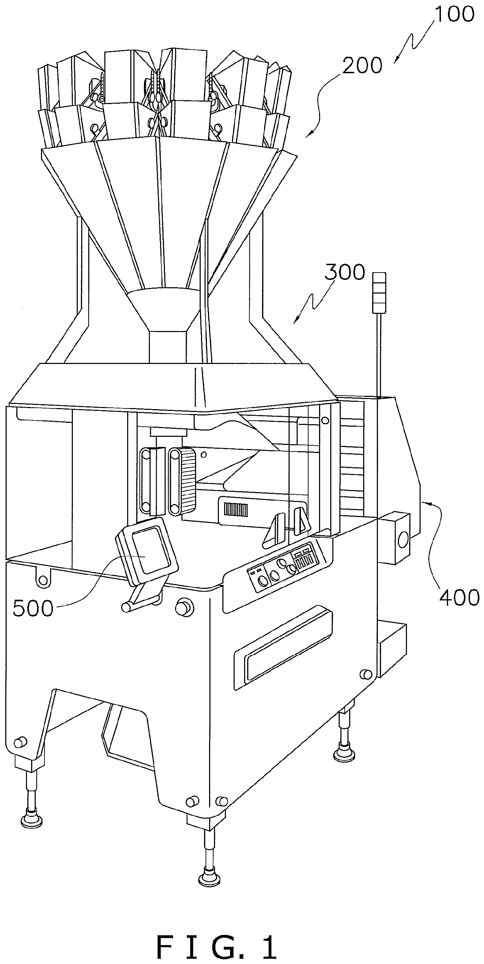

FIG. 1 is a perspective view of a bag making and packaging machine 100 according to one embodiment of the present invention. The bag making and packaging machine 100 is disposed in a product production line for producing a product in a plant or the like. That is to say, the bag making and packaging machine 100 corresponds to a production line configuration apparatus configuring a product production line.

Here, a "product" refers to an article in which a predetermined amount of objects have been packaged at each of the production line configuration apparatuses connected to each other with conveyors configuring a conveyance line, or refers to an article which is subjected to printing, application of a label or the like in response to conditions, or boxing in a box formed in response to shipment form. Moreover, a "product production line" refers to a line in which performed are processes with regard to operations related to the production of a product (for example, processes such as weighing, packaging, printing, application of label or the like, case forming, and boxing for an article).

The bag making and packaging machine 100 primarily includes a combination weighing unit 200, a bag making and packaging unit 300, a film supply unit 400, and a liquid crystal display 500 as one example of a manipulation part.

The combination weighing unit 200 is disposed above the bag making and packaging unit 300. The combination weighing unit 200 weighs weights of objects to be packaged with a plurality of weighing hoppers. The combination weighing unit 200 combines values of the weights weighed with each of the weighing hoppers so that the weights will amount to a preset total weight. The combination weighing unit 200 downwardly ejects the objects having the preset total weight to supply the bag making and packaging unit 300 with the objects.

The bag making and packaging unit 300 puts the objects supplied by the combination weighing unit 200 into a bag and seals the bag. Details of the bag making and packaging unit 300 will be described later.

The film supply unit 400 is disposed adjacent to the bag making and packaging unit 300. The film supply unit 400 supplies the bag making and packaging unit 300 with a film for packaging. Details of the film supply unit 400 will be described later.

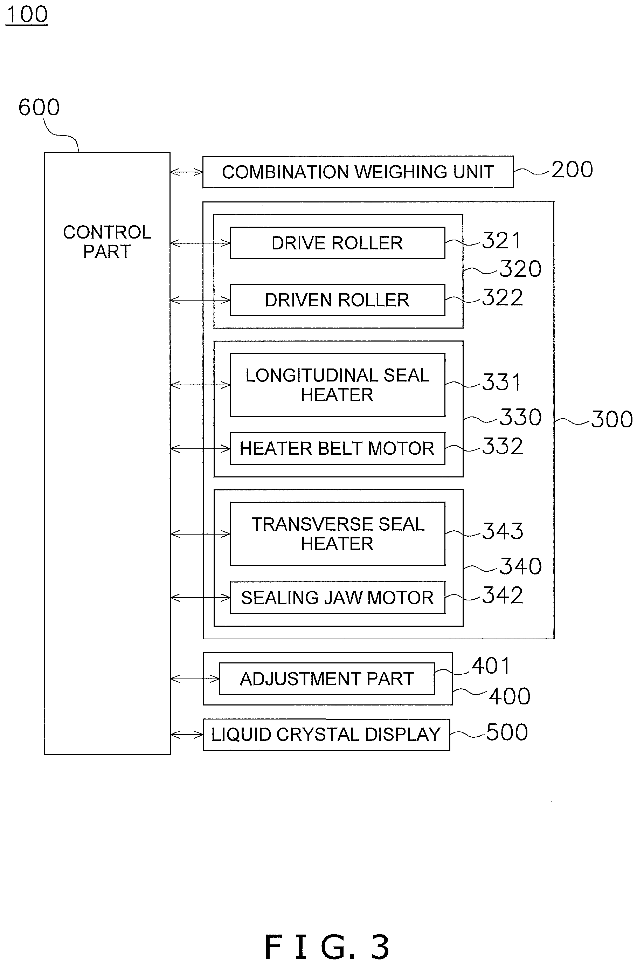

The liquid crystal display 500 is a touch-sensitive display. The liquid crystal display 500 functions as an output device displaying information related to the bag making and packaging machine 100 and simultaneously functions as an input device accepting instructions to the bag making and packaging machine 100 and settings related to the bag making and packaging machine 100. For example, the liquid crystal display 500 displays an adjustment screen for adjusting a set value set in an adjustment part 401 (see FIG. 3) as one example of an operation part described later and accepts input via a touch manipulation by a user on the adjustment screen.

### (2) Structure of Bag Making and Packaging Unit

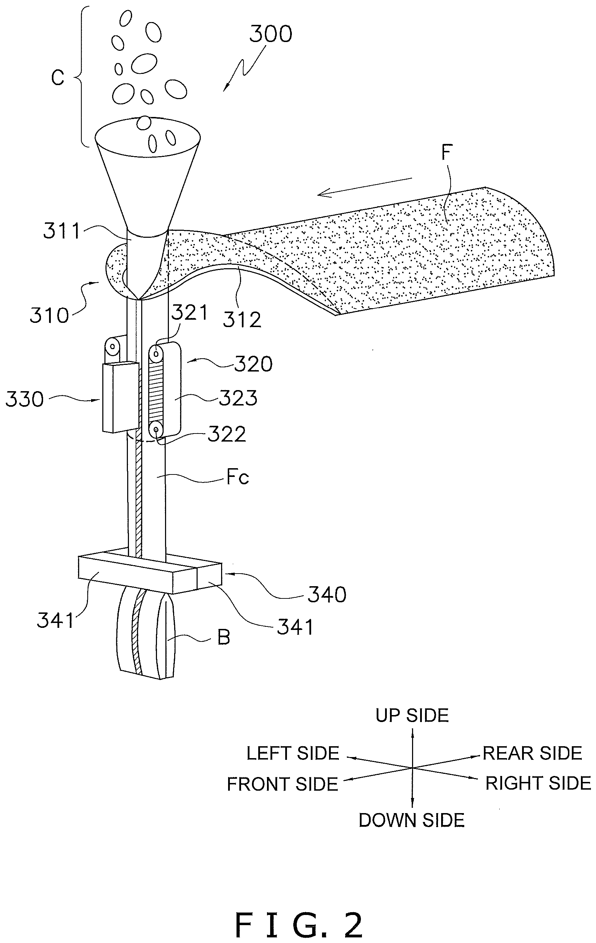

FIG. 2 is a perspective view showing a schematic structure of the bag making and packaging unit 300. The bag making and packaging unit 300 primarily includes a forming mechanism 310, a pull-down belt mechanism 320, a longitudinal sealing mechanism 330, and a transverse sealing mechanism 340. In the present description, the six directions of "front", "rear", "up", "down", "left", "right" are defined as shown in FIG. 2. Moreover, "front" may be referred to as "frontal".

The forming mechanism 310 forms a sheet-shaped film F conveyed from the film supply unit 400 in a tubular shape. The pull-down belt mechanism 320 downwardly conveys the film F formed in a tubular shape. The longitudinal sealing mechanism 330 seals an overlap that is a seam of both of end portions of the film F formed in a tubular shape in a longitudinal direction parallel to a conveyance direction to form a tubular film Fc. The transverse sealing mechanism 340 seals the tubular film Fc in a transverse direction orthogonal to the conveyance direction to form a bag B which has its upper end portion and lower end portion transversely sealed.

Details of each of structure elements of the bag making and packaging unit 300 will be described.

### (2-1) Forming Mechanism

The forming mechanism 310 includes a tube 311 and a former 312. The tube 311 is a cylindrical member having an opening at its upper end and lower end. Objects C to be packaged supplied by the combination weighing unit 200 are thrown into the opening of the upper end of the tube 311. The former 312 is disposed in such a way as to surround the tube 311. The film F delivered out from a film roll of the film supply unit 400 is wound around the tube 311 and formed in a tubular shape when passing a gap between the tube 311 and the former 312. The tube 311 and the former 312 are able to be replaced in response to the size of the bag B to be manufactured.

### (2-2) Pull-Down Belt Mechanism

The pull-down belt mechanism 320 applies suction to and downwardly conveys the film F wound around the tube 311. The pull-down belt mechanism 320 primarily includes drive rollers 321, driven rollers 322 and a pair of belts 323. As shown in FIG. 2, the pair of belts 323 are disposed on both of the left and right sides of the tube 311 so as to sandwich the tube 311 and applies suction to the film F formed in a tubular shape. The pull-down belt mechanism 320 drives the pair of belts 323 in rotation with the drive rollers 321 and the driven rollers 322, thereby downwardly conveying the film F formed in a tubular shape.

### (2-3) Longitudinal Sealing Mechanism

The longitudinal sealing mechanism 330 seals the film F formed in a tubular shape in the longitudinal direction, which is the up-and-down direction. The longitudinal sealing mechanism 330 is disposed on the frontal side of the tube 311. The longitudinal sealing mechanism 330 is provided with a heater belt coming into contact with the seam of the film F, a longitudinal seal heater 331 heating the heater belt (see FIG. 3), a heater belt motor 332 for driving the heater belt in rotation (see FIG. 3) and the like. While it presses the seam of the film F against the tube 311 at a given pressure, the longitudinal sealing mechanism 330 forces the heater belt heated by the longitudinal seal heater 331 into contact with the seam of the film F. Thus, the tubular film Fc is formed with the seam sealed in the longitudinal direction. Note that, in the present description, a process for sealing the seam of the film F in the longitudinal direction can be referred to as a longitudinal seal process.

Here, when the film F meanders in a width direction thereof, the seam of the tubular film Fc longitudinally sealed may be misaligned. Specifically, in the case where a new film roll is loaded, the seam of the tubular film Fc longitudinally sealed may be misaligned in accordance with the material, the size and the like of the new film roll which has been loaded. In particular, in the case where a new type of film roll is loaded, misalignment of the seam of the film F may noticeably occur. In this case, the user needs to adjust the position of the film roll by adjusting the set value in the adjustment part 401 via the liquid crystal display 500. In particular, in the case where a new type of film roll is loaded, the set value in the adjustment part 401 may have to be repeatedly adjusted. As discussed in detail later, since, in the bag making and packaging machine 100 of the present embodiment, the set value in the adjustment part 401 is able to be adjusted on the basis of a method for the touch manipulation, a workload on the user is able to be reduced even in the case where the set value needs to be repeatedly adjusted.

### (2-4) Transverse Sealing Mechanism

The transverse sealing mechanism 340 seals the tubular film Fc in the transverse direction, which is the left-and-right direction. The transverse sealing mechanism 340 is disposed below the longitudinal sealing mechanism 330. The transverse sealing mechanism 340 is provided with a pair of sealing jaws 341. The transverse sealing mechanism 340 is also provided with a sealing jaw motor 342 (see FIG. 3) allowing the sealing jaws 341 to turn in such a way that each of the sealing jaws 341 draws a D-shape trajectory symmetrical to each other in the state where the pair of sealing jaws 341 are on opposite sides of the tubular film Fc. The pair of sealing jaws 341 move in such a way as to move toward and away from each other in the front-and-rear direction.

The transverse sealing mechanism 340 is provided with a transverse seal heater 343 (see FIG. 3) and a cutter, housed in the sealing jaws 341. The transverse sealing mechanism 340 sandwiches the tubular film Fc between the pair of sealing jaws 341 and heats the tubular film Fc using the transverse seal heater 343 to seal it in the transverse direction. More in detail, the upper end portion and the lower end portion of the tubular film Fc are sealed in the transverse direction, thereby forming the bag B. The transverse sealing mechanism 340 cuts the tubular film Fc to separate the bag B therefrom using the cutter at the center position in the height direction, which is the up-and-down direction, between the portions sealed in the transverse direction.

In the case where a process for correcting the misalignment of the seam of the film F is performed, the user may carry out the operation by the longitudinal sealing mechanism 330 after stopping the operation of the transverse sealing mechanism 340. Since the film F longitudinally sealed is conveyed lower than the liquid crystal display 500, the user difficultly views both of the film F longitudinally sealed and the liquid crystal display 500. As discussed in detail later, since, in the bag making and packaging machine 100 of the present embodiment, the set value in the adjustment part 401 is able to be adjusted though the liquid crystal display 500 is not seen, the workload on the user is able to be reduced.

### (3) Structure of Film Supply Unit

The film supply unit 400 includes the film roll having the wound film F, a film roll hold part holding the film roll, and the adjustment part 401 adjusting the meandering of the film F in the width direction. The adjustment part 401 includes an adjustment mechanism adjusting the position of the film roll by moving it in the width direction of the film F and a drive motor driving the adjustment mechanism. The adjustment mechanism moves the position of the film roll in the width direction of the film F to enable the misalignment of the seam of the film F longitudinally sealed to be corrected.

### (4) Functional Blocks of Bag Making and Packaging Machine

FIG. 3 is a functional block diagram of the bag making and packaging machine 100 in FIG. 1. As previously described, the bag making and packaging machine 100 is provided with the combination weighing unit 200, the drive rollers 321, the driven rollers 322, the longitudinal seal heater 331, the heater belt motor 332, the sealing jaw motor 342, the transverse seal heater 343, the adjustment part 401, and the liquid crystal display 500. The bag making and packaging machine 100 is also provided with a control part 600.

The control part 600 is a computer configured with a CPU, ROM, RAM and the like. The control part 600 is connected to the combination weighing unit 200, the bag making and packaging unit 300, the film supply unit 400, and the liquid crystal display 500. The control part 600 stores corresponding information described later in ROM.

The control part 600 controls the combination weighing unit 200, the bag making and packaging unit 300, and the film supply unit 400 in response to input from the liquid crystal display 500, and outputs various information to the liquid crystal display 500. In the present embodiment, the control part 600 functions as a change part changing the set value in the adjustment part 401 on the basis of a method for the touch manipulation. More in detail, the control part 600 receives manipulation method information indicating a method for the touch manipulation performed by the user from the liquid crystal display 500, and changes the set value in the adjustment part 401 in response to the received manipulation method information and the corresponding information. In the present embodiment, the set value in the adjustment part 401 is a value indicating the position of the adjustment mechanism. The control part 600 changes the set value by adding a value indicating a direction of movement and an amount of movement of the adjustment mechanism to the set value. In the present embodiment, the direction of movement and the amount of movement of the adjustment mechanism correspond to a direction of movement and an amount of movement of the film roll in a one-to-one manner. Therefore, by a value indicating a direction of movement and an amount of movement of the adjustment mechanism is added to the set value as appropriate, the position of the film roll is thereby able to be adjusted.

Note that the set value in the adjustment part 401 is not limited to the value indicating the position of the adjustment mechanism, and may be, for example, an operation set value of the drive motor. In this case, the control part 600 adjusts the position of the film roll by controlling the drive motor at the operation set value depending on a targeted direction of movement and amount of movement of the film roll.

Moreover, the control part 600 allows an indication screen of the liquid crystal display 500 to transit in response to input via a touch manipulation on the liquid crystal display 500. For example, the control part 600 allows it to transit from a base screen of a manipulation screen to the adjustment screen for correcting the misalignment of the seam longitudinally sealed. Details of the adjustment screen will be described later.

### (5) One Example of Corresponding Information

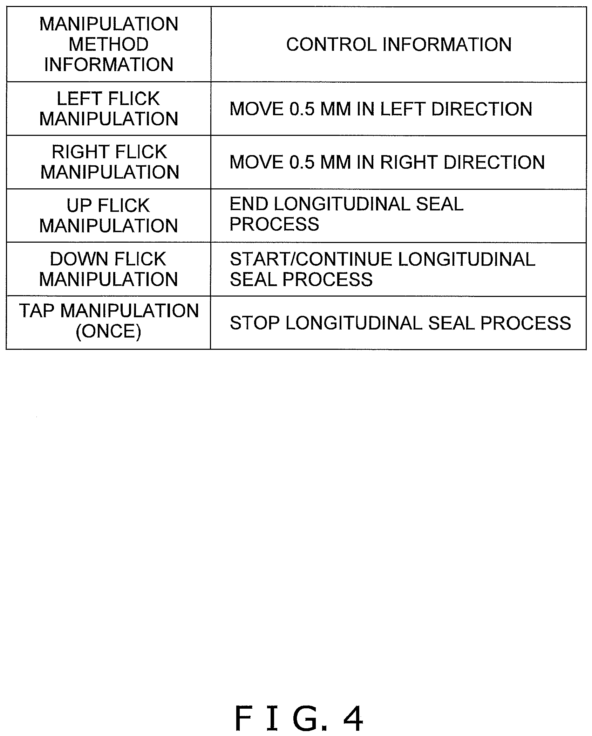

FIG. 4 illustrates one example of corresponding information. The corresponding information is configured with manipulation method information and control information associated with each other.

The manipulation method information is information indicating methods for the touch manipulation. In the example in FIG. 4, as the manipulation method information, a "left flick manipulation", a "right flick manipulation", an "up flick manipulation", a "down flick manipulation", and a "tap manipulation (once)" are used. The flick manipulation is a manipulation to slide in such a way as to fillip immediately after depressing the liquid crystal display 500 with a finger. The tap manipulation is a manipulation to depress in such a way as to lightly hit the liquid crystal display 500 with a finger.

The control information is information indicating control content. In the example in FIG. 4, the control information includes information related to the adjustment part 401 and information related to the longitudinal seal process.

The information related to the adjustment part 401 is, specifically, information indicating a direction of movement and an amount of movement of the adjustment mechanism. In the example in FIG. 4, as information related to the adjustment part 401 "move 0.5 mm in left direction", and "move 0.5 mm in right direction" are shown. Note that, in the present embodiment, the left direction is defined as a positive direction, and the right direction is defined as a negative direction. Therefore, in the case where "move 0.5 mm in left direction" is performed, +0.5 mm is added to the set value, and in the case where "move 0.5 mm in right direction" is performed, -0.5 mm is added to the set value.

Information related to the longitudinal seal process is, specifically, information indicating operations for the longitudinal seal process. In the example in FIG. 4, as the information related to the longitudinal seal process, "end longitudinal seal process", "start/continue longitudinal seal process", and "stop longitudinal seal process" are shown.

The "left flick manipulation" is associated with "move 0.5 mm in left direction", and the "right flick manipulation" is associated with "move 0.5 mm in right direction". The "up flick manipulation" is associated with "end longitudinal seal process", the "down flick manipulation" is associated with "start/continue longitudinal seal process", and the "tap manipulation (once)" is associated with "stop longitudinal seal process". Since, as described above, the manipulation method information and the control information are associated with each other in a one-to-one manner, the control part 600 enables to differ control content to depend on which method of the plurality of methods for the touch manipulation is performed in inputting on the liquid crystal display 500.

### (6) One Example of Adjustment Screen

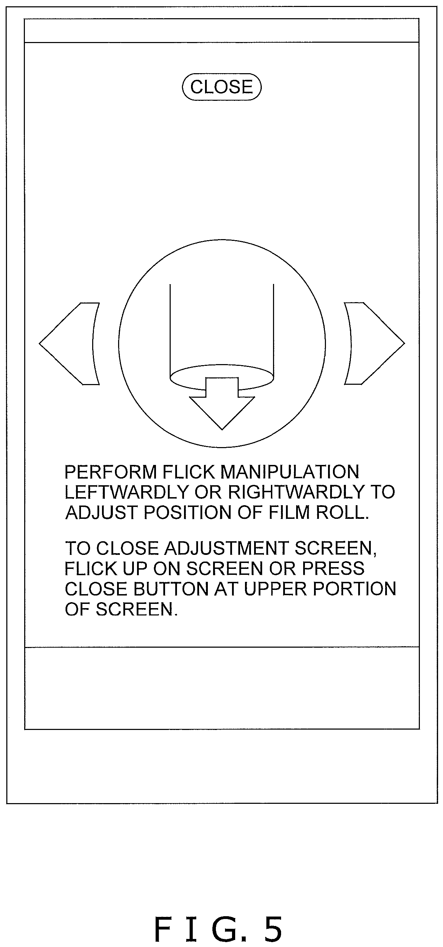

FIG. 5 illustrates one example of the adjustment screen. As previously described, the control part 600 adjusts the position of the film roller in accordance with a method for the touch manipulation on the liquid crystal display 500 rather than the position for the touch manipulation on the liquid crystal display 500. Therefore, the liquid crystal display 500 may not display a button for adjusting the misalignment in a preset region. It is enough that the liquid crystal display 500 displays processing content corresponding to a method for the touch manipulation. Thus, it is possible to encourage the user to enter suitable manipulation input. In the example in FIG. 5, the liquid crystal display 500 displays the content of "Perform Flick Manipulation Leftwardly or Rightwardly to Adjust Position of Film Roll" as processing content. Once the user temporarily grasps the displayed content, subsequently, the user is able to enter manipulation input without checking the liquid crystal display 500. Therefore, for example, even in the case where the position of the film roll is repeatedly adjusted leftwardly or rightwardly, the liquid crystal display 500 may not be seen every time, and a method for the touch manipulation is just changed, an adjustment value is thereby able to be easily adjusted.

In the example in FIG. 5, the liquid crystal display 500 also displays the "Close button" as a button for closing the adjustment screen and the content of "To Close Adjustment Screen, Flick Up on Screen or Press Close Button at Upper Portion of Screen". Therefore, the user is able to do not only manipulation input for adjusting the position of the film roll but also manipulation input for closing the adjustment screen without seeing the liquid crystal display 500.

### (7) One Example of Flowchart

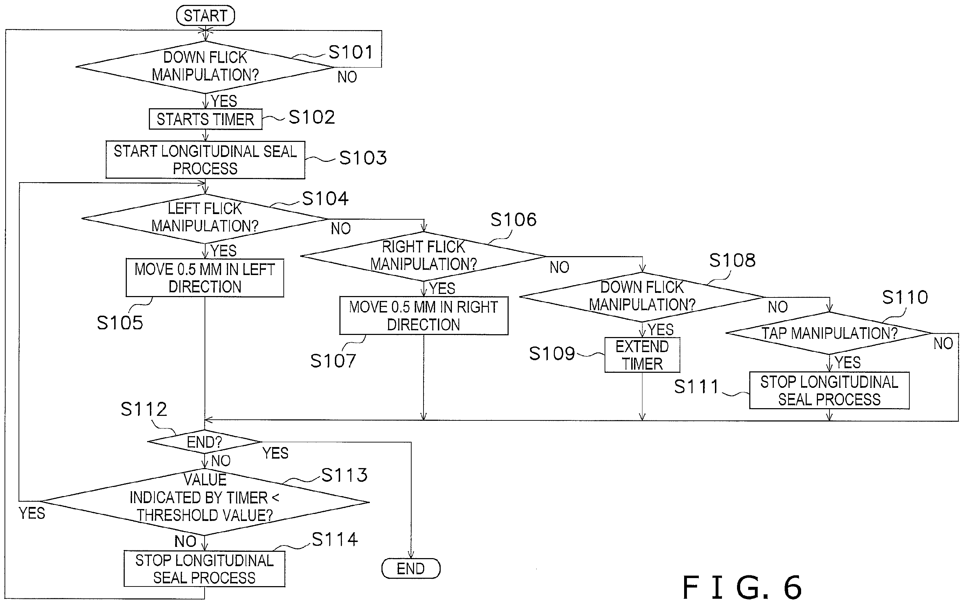

FIG. 6 is a flowchart of the process for correcting the misalignment of the seam longitudinally sealed. The present flowchart is started in the case where the adjustment screen is selected from the base screen of the manipulation screen by the user. When the adjustment screen is selected, the control part 600 displays, for example, the adjustment screen as shown in FIG. 5 on the liquid crystal display 500.

As previously described, the longitudinal seal process is started in the case where a down flick manipulation has been performed by the user. Initially, the liquid crystal display 500 determines whether a down flick manipulation has been performed (step S101). In the case where the liquid crystal display 500 has determined that a down flick manipulation has been performed (step S101 - YES), the control part 600 starts a preset timer (step S102) and starts the longitudinal seal process (step S103). On the other hand, in the case where the liquid crystal display 500 has determined that a down flick manipulation has not been performed (step S101 - NO), the timer and the longitudinal seal process do not start but wait.

The control part 600 starts the timer and the longitudinal seal process, and subsequently adjusts a direction of movement and an amount of movement of the film roller in response to manipulation input via a touch manipulation by the user. Specifically, the processing content will be described below.

Initially, the liquid crystal display 500 determines whether a left flick manipulation has been performed (step S104). In the case where the liquid crystal display 500 has determined that a left flick manipulation has been performed (step S104 - YES), the control part 600 controls the adjustment part 401 so as to move the film roller 0.5 mm in the left direction (step S105).

On the other hand, in the case where it has determined that a left flick manipulation has not been performed (step S104 - NO), the liquid crystal display 500 determines whether a right flick manipulation has been performed (step S106). In the case where the liquid crystal display 500 has determined that a right flick manipulation has been performed (step S106 - YES), the control part 600 controls the adjustment part 401 so as to move the film roller 0.5 mm in the right direction (step S107).

On the other hand, in the case where it has determined that a right flick manipulation has not been performed (step S106 - NO), the liquid crystal display 500 determines whether a down flick manipulation has been performed (step S108). In the case where the liquid crystal display 500 has determined that a down flick manipulation has been performed (step S108 - YES), the control part 600 adds a preset value to the timer to extend the period of time of the timer, that is, the period of time of the longitudinal seal process (step S109).

On the other hand, in the case where it has determined that a down flick manipulation has not been performed (step S108 - NO), the liquid crystal display 500 determines whether a tap manipulation has been performed once (step S110). In the case where the liquid crystal display 500 has determined that a tap manipulation has been performed once (step S110 - YES), the control part 600 stops the longitudinal seal process (step Sill). In the case where any of processes at step S105, step S107, step S109, and step S111 has been carried out, or in the case where, at step S110, the liquid crystal display 500 has determined that a tap manipulation has not been performed once (step S110 - NO), the control part 600 determines whether instructions to end an adjustment process have been performed (step S112). This determination is implemented according to that, for example, the liquid crystal display 500 determines whether the "close button" in FIG. 5 has been depressed, or whether an up flick manipulation has been performed.

In the case where the liquid crystal display 500 has determined that instructions to end the adjustment process have not been performed (step S112 - NO), the control part 600 determines whether a value indicated by the timer is smaller than a threshold value (step S113). In the case where the control part 600 has determined that the value indicated by the timer is smaller than the threshold value (step S113 - YES), the flow proceeds to step S104.

On the other hand, in the case where it has determined that the value indicated by the timer is equal to the threshold value or more (step S113 - NO), the control part 600 stops the longitudinal seal process (step S114). Subsequently, the flow proceeds to step S101. At step S113, in the case where it has determined that instructions to end the adjustment process have been performed (step S112 - YES), the control part 600 ends a series of the processes.

### (8) Modifications

### (8-1) Modification of Methods for Tap Manipulation

The control part 600 may change the set value in response to the number of times of the tap manipulation for a preset period of time. For example, when a tap manipulation has been performed once for the preset period of time, the control part 600 performs "move 0.5 mm in left direction". Also, for example, when a tap manipulation has been performed twice, the control part 600 performs "move 0.5 mm in right direction".

The control part 600 may change the set value in response to the number of portions of the liquid crystal display 500 simultaneously depressed by the user. For example, in the case where one location has been depressed on the liquid crystal display 500, the control part 600 performs "move 0.5 mm in left direction". Also, for example, in the case where two locations have been depressed thereon, the control part 600 performs "move 0.5 mm in right direction".

The control part 600 may change the set value in response to a type of the tap manipulation. Specifically, the control part 600 may change the set value to a value different for each of types of the tap manipulation. For example, when a flick manipulation has been performed, the control part 600 performs "move 0.5 mm in left direction". Also, for example, when a tap manipulation has been performed, the control part 600 performs "move 0.5 mm in right direction".

### (8-2) Modification of Operation Part

### (8-2-1) Longitudinal Seal Heater 331 and Heater Belt Motor 332

In the above description, the adjustment part 401 has been taken as an example of the operation part; however, at least one of the longitudinal seal heater 331 and the heater belt motor 332 can be taken as an operation part.

At a longitudinal sealed portion, wrinkles may occur in accordance with drive speeds of the heater belt motor 332, the drive rollers 321, and the driven rollers 322. Moreover, wrinkles may occur in accordance with a temperature of the longitudinal seal heater 331. The set value of the temperature of the longitudinal seal heater 331 and the drive speed of the heater belt motor 332 as appropriate are adjusted, and wrinkles at the longitudinal sealed portion are thereby able to be reduced. By storing corresponding information suited for the longitudinal seal heater 331 and the heater belt motor 332, the temperature of the longitudinal seal heater 331 and the drive speed of the heater belt motor 332 are thereby able to be adjusted as mentioned above in response to a method for the touch manipulation. More in detail, the control part 600 receives manipulation method information indicating a method for the touch manipulation from the liquid crystal display 500, and may change at least one of the set value of the temperature of the longitudinal seal heater 331 and a set value of the drive speed of the heater belt motor 332 in response to the received manipulation method information and corresponding information. Hereinafter, the case where the temperature of the longitudinal seal heater 331 is changed will be described.

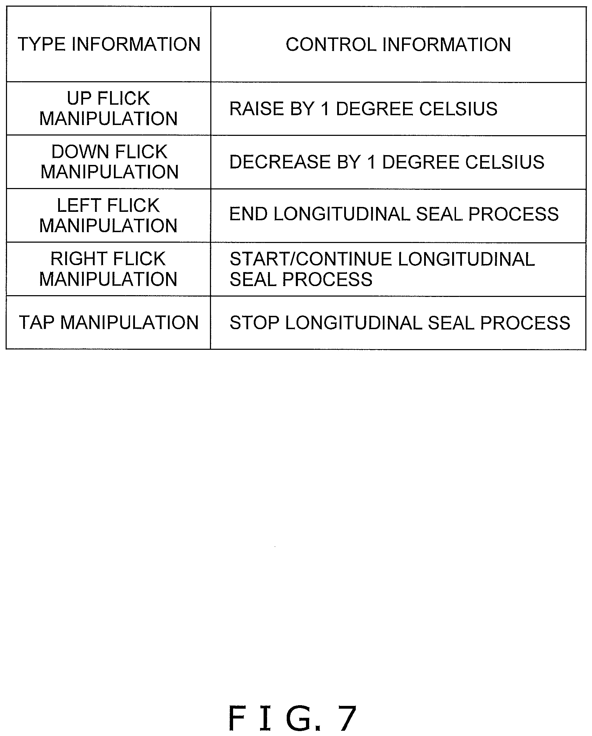

FIG. 7 illustrates another example of corresponding information. As previously described, the corresponding information is configured with manipulation method information and control information associated with each other. The manipulation method information has been previously described referring to FIG. 4. In the example in FIG. 7, the control information includes information related to the longitudinal seal heater 331 and the information related to the longitudinal seal process.

Information related to the longitudinal seal heater 331 is, specifically, information indicating an amount of change of the temperature of the longitudinal seal heater 331, and whether the temperature is raised or decreased. In the example in FIG. 7, as information related to the longitudinal seal heater 331, "raise by 1 degree Celsius" and "decrease by 1 degree Celsius" are shown. In the case where "raise by 1 degree Celsius" is performed, +1 degree Celsius is added to the set value, and in the case where "decrease by 1 degree Celsius" is performed, -1 degree Celsius is added to the set value. The information related to the longitudinal seal process has been previously described referring to FIG. 4.

In the example in FIG. 7, an "up flick manipulation" is associated with "raise by 1 degree Celsius", and a "down flick manipulation" is associated with "decrease by 1 degree Celsius". A "left flick manipulation" is associated with "end longitudinal seal process", a "right flick manipulation" is associated with "start/continue longitudinal seal process", and a "tap manipulation" is associated with "stop longitudinal seal process".

In the example in FIG. 7, the set value of the temperature is raised or decreased in accordance with whether a sliding direction of a flick manipulation is the up or down direction. Since the raised and decreased directions of the set value and the manipulation directions are associated with each other, the user is able to intuitively enter manipulation input.

### (8-2-2) Printer

The bag making and packaging machine 100 may be provided with a printer, which is as one example of a printing apparatus, printing a manufacturing date, a weight, and a price or the like on the film F in a conveyance path taken to form the film F in a tubular shape by the former 312. In this case, the printer can be interpreted as an operation part. The printer is connected to the control part 600. In the case where a print position is misaligned with respect to the film F, the print position by the printer is adjusted, and misalignment of the print position is thereby able to be corrected. In this case, as previously described, corresponding information suited for the printer is stored, and the print position is thereby able to be adjusted in response to the method for the touch manipulation performed by the user. More in detail, the control part 600 receives manipulation method information indicating a method for the touch manipulation from the liquid crystal display 500, and may change the print position by the printer in response to the received manipulation method information and corresponding information.

### (8-3) Modification of Set Value

In the above description, the value of 0.5 mm has been taken as an example of the amount of movement of the adjustment mechanism; however, the amount of movement of the adjustment mechanism is not limited to this, and may be changed as appropriate in response to a needed resolution. Similarly, the temperature of 1 degree Celsius has been taken as an example of the amount of change of the temperature of the longitudinal seal heater 331; however, the temperature of the longitudinal seal heater 331 is not limited to this, and may be changed as appropriate in response to a needed resolution.

### (8-4) Other Modifications

In the above description, the bag making and packaging machine 100 has been taken as an example of the production line configuration apparatus configuring a production line for a product; however, the idea according to the above embodiment can be applied to other production line configuration apparatuses in a range that does not produce inconsistency.

As a production line configuration apparatus to which the above idea is applicable, for example, a combination weighing apparatus including a plurality of weighing hoppers and ejecting articles with a predetermined weight from hoppers selected on the basis of a weight value in each of the hoppers will be given. In a conventional combination weighing apparatus, a distribution feeder receives articles conveyed from an upstream conveyor and distributes to each of hoppers. The distribution feeder is a scale. The distribution feeder detects weights of the articles on the distribution feeder for control of an amount of the articles supplied to the combination weighing apparatus. Moreover, aside from this, the articles on the distribution feeder or the articles passed to the distribution feeder are monitored with a camera so that the amount of supply of articles supplied to the combination weighing apparatus will be being controlled. In this regard, with regard to a set amount of supply, when the amount of supply varies during running, a need to correct settings on the amount of supply may occur. In such a case, when the idea of the present invention is applied, a flick manipulation is performed on the touch panel while the amount of supply is seen (with a surveillance camera or the like), a set value is thereby able to be changed.

Moreover, aside from this, as a production line configuration apparatus to which the above idea is applicable, for example, a label application apparatus applying a label on a package (e.g., a tray and the like in which objects have been packaged) will be given. In a conventional label application apparatus, before starting work, packages are carried on a one-by-one basis so that an application position will be checked and adjusted. Then, after starting the work, package trays are successively carried, and an operation of applying a label on each of package trays carried is performed. When the idea according to the present invention is applied to the label application apparatus run in such a manner, and in the case where the application position has slightly been misaligned after starting the work, fine adjustment to the application position is able to be made while the work is continued. In particular, a flick manipulation is performed in the up, down, left and right directions on the touch panel while the application position of a label is seen, a set position is thereby able to be changed.

Moreover, aside from this, as a production line configuration apparatus to which the above idea is applicable, for example, a case forming apparatus forming a box from a sheet-shaped case forming sheet will be given. In the case where the idea according to the present invention is applied to the case forming apparatus, a case forming mechanism performing the opening of a sheet and/or a tape application mechanism performing the application of adhesive tape and the like correspond to operation parts.

Moreover, aside from this, as a production line configuration apparatus to which the above idea is applicable, for example, a box packing apparatus boxing a plurality of products into a box formed by a case forming apparatus will be given. In the case where the idea according to the present invention is applied to the box packing apparatus, a product alignment mechanism aligning a plurality of products on a conveyor and/or a conveyance mechanism such as an arm applying suction to a product on the conveyor and conveying it into a box and the like correspond to operation parts.

### (9) Characteristics

The bag making and packaging machine 100 of the above embodiment is a production line configuration apparatus configuring a production line for a product, and is provided with the adjustment part 401, the liquid crystal display 500, and the control part 600. The adjustment part 401 performs operations related to making a bag (i.e., operations related to the production of a product). The liquid crystal display 500 is a touch-sensitive manipulation part accepting input via a touch manipulation by the user. The control part 600 changes a set value in the adjustment part 401 on the basis of a method for the touch manipulation.

In the bag making and packaging machine 100 of the above embodiment, the touch manipulation includes the flick manipulations. The control part 600 changes the set value on the basis of a sliding direction of a finger of the user during a flick manipulation that is the method for the touch manipulation.

In the bag making and packaging machine 100 of the above embodiment, the control part 600 changes the set value to a value which is different in the case where the sliding direction is the left direction versus in the case where the sliding direction is the right direction.

In the bag making and packaging machine 100 of the above embodiment, the control part 600 changes the set value to a value which is different in the case where the sliding direction is the up direction versus in the case where the sliding direction is the down direction.

In the bag making and packaging machine 100 of the above embodiment, the touch manipulation includes a tap manipulation. The control part 600 changes the set value on the basis of the number of times for a preset period of time of the tap manipulation that is the method for the touch manipulation.

In the bag making and packaging machine 100 of the above embodiment, the control part 600 changes the set value on the basis of the number of portions of the touch panel simultaneously depressed, which is the method for the touch manipulation, by the user.

In the bag making and packaging machine 100 of the above embodiment, the adjustment part 401 adjusts width-wise meandering of the film F of the film roll held on the film roll hold part. The control part 600 changes, as the set value, a value indicating a position of the adjustment part 401.

The bag making and packaging machine 100 of the above embodiment includes the longitudinal seal heater 331, the heater belt, and the heater belt motor 332. The heater belt is heated by the longitudinal seal heater 331. The heater belt motor 332 drives the heater belt in rotation. The control part 600 changes, as the set value, at least one of a value indicating the temperature of the heater and a value indicating the rotational speed of the heater belt.

The bag making and packaging machine 100 of the above embodiment includes the printing apparatus printing on the film F. The control part 600 changes, as the set value, a value indicating a print position with respect to the film F.

While the present invention has been descried with respect to the embodiments thereof, the technical scope of the present invention is not limited to that described with the embodiment. It will be apparent to those skilled in the art that various modifications or improvements can be made within the scope of the appended claims, said claims defining the invention.

For the order of the execution of each of the processes such as the operations, the sequence, the steps, and the stages in the apparatuses, the program, and the methods described in the claims, the specification, and the drawings, it should be noted that these can be implemented in any order, unless "prior to", "previous to" and the like are not especially explicitly described and unless output of a previous process is used for a subsequent process. For the sake of convenience, "initially", "next" and the like are used to describe the operation flow in the claims, the specification, and the drawings, which does not mean that it is necessary to execute in this order.

### REFERENCE SIGNS LIST

100 Bag Making and Packaging Machine
200 Combination Weighing Unit
300 Bag Making and Packaging Unit
310 Forming Mechanism
311 Tube
312 Former
320 Pull-Down Belt Mechanism
321 Drive Roller
322 Driven Roller
323 Belt
330 Longitudinal Sealing Mechanism
331 Longitudinal Seal Heater
332 Heater Belt Motor
340 Transverse Sealing Mechanism
341 Sealing Jaw
342 Sealing Jaw Motor
343 Transverse Seal Heater
400 Film Supply Unit
401 Adjustment Part
500 Liquid Crystal Display
600 Control Part

### CITATION LIST

### <Patent Literature>

Patent Document 1: Japanese Laid-open Patent Publication No. 2006-206153

## Claims

1. A production line configuration apparatus configuring a production line for a product comprising:
an operation part (200, 300, 400) performing an operation related to production of the product;
a touch-sensitive manipulation part (500) accepting input via a touch manipulation by a user; and
a change part (600) changing a set value in the operation part on the basis of a method for the touch manipulation,
whereby the touch manipulation is a flick manipulation, a swipe manipulation or a tap manipulation,
**characterized**
**in that** the production line configuration apparatus is a bag making and packaging machine which comprises the operation part performing an operation related to at least one of bag making and packaging, wherein the operation part (200, 300, 400) includes an adjustment part (401) adjusting width-wise meandering of a film of a film roll held on a film roll hold part, and the change part (600) changes, as the set value, a value indicating a position of the adjustment part.

2. A production line configuration apparatus configuring a production line for a product comprising:
an operation part (200, 300, 400) performing an operation related to production of the product;
a touch-sensitive manipulation part (500) accepting input via a touch manipulation by a user; and
a change part (600) changing a set value in the operation part on the basis of a method for the touch manipulation,
whereby the touch manipulation is a flick manipulation, a swipe manipulation or a tap manipulation,
**characterized**
**in that** the production line configuration apparatus is a bag making and packaging machine which comprises the operation part performing an operation related to at least one of bag making and packaging, wherein the operation part includes a heater (331), a heater belt heated by the heater, and a drive part driving the heater belt in rotation, and the change part (600) changes, as the set value, at least one of a value indicating a temperature of the heater and a value indicating a rotational speed of the heater belt.

3. A production line configuration apparatus configuring a production line for a product comprising:
an operation part (200, 300, 400) performing an operation related to production of the product;
a touch-sensitive manipulation part (500) accepting input via a touch manipulation by a user; and
a change part (600) changing a set value in the operation part on the basis of a method for the touch manipulation,
whereby the touch manipulation is a flick manipulation, a swipe manipulation or a tap manipulation,
**characterized**
**in that** the production line configuration apparatus is a bag making and packaging machine which comprises the operation part performing an operation related to at least one of bag making and packaging, wherein
the operation part includes a printing apparatus printing on a film, and
the change part (600) changes, as the set value, a value indicating a print position with respect to the film.

4. The production line configuration apparatus according to any of claims 1 to 3, wherein
the touch manipulation includes a flick manipulation, and
the change part (600) changes the set value on the basis of a sliding direction of a finger of the user during the flick manipulation.

5. The production line configuration apparatus according to claim 4, wherein
the change part (600) changes the set value to a value which is different in the case where the sliding direction is a left direction versus in the case where the sliding direction is a right direction.

6. The production line configuration apparatus according to claim 4 or 5, wherein
the change part (600) changes the set value to a value which is different in the case where the sliding direction is an up direction versus in the case where the sliding direction is an down direction.

7. The production line configuration apparatus according to any one of claims 1 to 6, wherein
the touch manipulation includes a tap manipulation, and
the change part (600) changes the set value on the basis of the number of times of the tap manipulation for a preset period of time.

8. The production line configuration apparatus according to any one of claims 1 to 7, wherein
the change part (600) changes the set value on the basis of the number of portions of a touch panel simultaneously depressed by the user.

## Patentansprüche

1. Produktionslinien-Konfigurationsvorrichtung, die eine Produktproduktionslinie für ein Produkt konfiguriert, die aufweist:
einen Betriebsteil (200, 300, 400), der einen Betrieb im Zusammenhang mit der Produktion des Produkts durchführt; einen berührungsempfindlichen Bedienungsteil (500), der eine Eingabe über eine Berührungsbedienung durch einen Benutzer annimmt; und
einen Änderungsteil (600), der einen Einstellwert im Betriebsteil auf der Grundlage eines Verfahrens für die Berührungsbedienung ändert,
wobei die Berührungsbedienung eine Schnippbedienung, eine Wischbedienung oder eine Tippbedienung ist,
**dadurch gekennzeichnet, dass** die Produktionslinien-Konfigurationsvorrichtung eine Beutelherstellungs- und Verpackungsmaschine ist, die den Betriebsteil aufweist, der einen Betrieb im Zusammenhang mit einer Beutelherstellung und/oder Verpackung durchführt, wobei der Betriebsteil (200, 300, 400) einen Einstellteil (401) aufweist, der das Mäandern in der Breitenrichtung einer Folie einer Folienrolle einstellt, die auf einem Folienrollen-Halteteil gehalten wird, und der Änderungsteil (600) als den Einstellwert einen Wert ändert, der eine Position des Einstellteils anzeigt.

2. Produktionslinien-Konfigurationsvorrichtung, die eine Produktproduktionslinie für ein Produkt konfiguriert, die aufweist:
einen Betriebsteil (200, 300, 400), der einen Betrieb im Zusammenhang mit der Produktion des Produkts durchführt;
eine berührungsempfindlichen Bedienungsteil (500), der eine Eingabe über eine Berührungsbedienung durch einen Benutzer annimmt; und
einen Änderungsteil (600), der einen Einstellwert im Betriebsteil auf der Grundlage eines Verfahrens für die Berührungsbedienung ändert,
wobei die Berührungsbedienung eine Schnippbedienung, eine Wischbedienung oder eine Tippbedienung ist,
**dadurch gekennzeichnet, dass** die Produktionslinien-Konfigurationsvorrichtung eine Beutelherstellungs- und Verpackungsmaschine ist, die den Betriebsteil aufweist, der einen Betrieb im Zusammenhang mit einer Beutelherstellung und/oder Verpackung durchführt, wobei der Betriebsteil eine Heizvorrichtung (331), ein durch die Heizvorrichtung erwärmtes Heizband und einen Antriebsteil aufweist, der das Heizband drehend antreibt, und der Änderungsteil (600) als den Einstellwert einen Wert, der eine Temperatur der Heizvorrichtung anzeigt, und/oder einen Wert ändert, der eine Drehzahl des Heizbands anzeigt.

3. Produktionslinien-Konfigurationsvorrichtung, die eine Produktproduktionslinie für ein Produkt konfiguriert, die aufweist:
einen Betriebsteil (200, 300, 400), der einen Betrieb im Zusammenhang mit der Produktion des Produkts durchführt;
eine berührungsempfindlichen Bedienungsteil (500), der eine Eingabe über eine Berührungsbedienung durch einen Benutzer annimmt; und
einen Änderungsteil (600), der einen Einstellwert im Betriebsteil auf der Grundlage eines Verfahrens für die Berührungsbedienung ändert,
wobei die Berührungsbedienung eine Schnippbedienung, eine Wischbedienung oder eine Tippbedienung ist,
**dadurch gekennzeichnet, dass** die Produktionslinien-Konfigurationsvorrichtung eine Beutelherstellungs- und Verpackungsmaschine ist, die den Betriebsteil aufweist, der einen Betrieb im Zusammenhang mit einer Beutelherstellung und/oder Verpackung durchführt, wobei
der Betriebsteil eine Druckvorrichtung aufweist, die eine Folie bedruckt, und
der Änderungsteil (600) als den Einstellwert einen Wert ändert, der eine Druckposition in Bezug auf die Folie anzeigt.

4. Produktionslinien-Konfigurationsvorrichtung nach einem der Ansprüche 1 bis 3, wobei die Berührungsbedienung eine Schnippbedienung aufweist, und der Änderungsteil (600) den Einstellwert auf der Grundlage einer Gleitrichtung eines Fingers des Benutzers während der Schnippbedienung ändert.

5. Produktionslinien-Konfigurationsvorrichtung nach Anspruch 4, wobei der Änderungsteil (600) den Einstellwert auf einen Wert ändert, der sich in dem Fall, in dem die Gleitrichtung eine Richtung nach links ist, gegenüber dem Fall unterscheidet, in dem die Gleitrichtung eine Richtung nach rechts ist.

6. Produktionslinien-Konfigurationsvorrichtung nach Anspruch 4 oder 5, wobei der Änderungsteil (600) den Einstellwert auf einen Wert ändert, der sich in dem Fall, in dem die Gleitrichtung eine Richtung nach oben ist, gegenüber dem Fall unterscheidet, in dem die Gleitrichtung eine Richtung nach unten ist.

7. Produktionslinien-Konfigurationsvorrichtung nach einem der Ansprüche 1 bis 6, wobei
die Berührungsbedienung eine Tippbedienung aufweist, und der Änderungsteil (600) den Einstellwert auf der Grundlage der Häufigkeit der Tippbedienung während einer voreingestellten Zeit ändert.

8. Produktionslinien-Konfigurationsvorrichtung nach einem der Ansprüche 1 bis 7, wobei
der Änderungsteil (600) den Einstellwert auf der Grundlage der Anzahl der Abschnitte eines Berührungsfelds ändert, die gleichzeitig durch den Benutzer gedrückt werden.

## Revendications

1. Dispositif de configuration de ligne de production assurant la configuration d'une ligne de production pour un produit, comprenant :
une partie fonctionnelle (200, 300, 400) effectuant une opération relative à la production du produit ;
une partie de manipulation tactile (500) acceptant une entrée par le biais d'une manipulation tactile par un utilisateur ; et
une partie de changement (600) changeant une valeur de consigne dans la partie fonctionnelle en fonction d'une méthode pour la manipulation tactile,
la manipulation tactile étant une manipulation par effleurement, une manipulation par glissement, ou une manipulation par tapotement,
**caractérisé en ce que** le dispositif de configuration de ligne de production est une machine de fabrication de sacs et d'emballage comprenant l'exécution, par la partie fonctionnelle, d'une opération relative à au moins un de la fabrication de sacs et de l'emballage, la partie fonctionnelle (200, 300, 400) comprenant une partie d'ajustage (401) assurant l'ajustage du serpentement dans le sens de la largeur d'une pellicule d'un rouleau de pellicule supporté sur une partie de support, et la partie de changement (600) changeant, en tant que valeur de consigne, une valeur indiquant une position de la partie d'ajustage.

2. Dispositif de configuration de ligne de production assurant la configuration d'une ligne de production pour un produit, comprenant :
une partie fonctionnelle (200, 300, 400) effectuant une opération relative à la production du produit ;
une partie de manipulation tactile (500) acceptant une entrée via une manipulation tactile par un utilisateur ; et
une partie de changement (600) changeant une valeur de consigne dans la partie fonctionnelle en fonction d'une méthode pour la manipulation tactile,
la manipulation tactile étant une manipulation par effleurement, une manipulation par glissement, ou une manipulation par tapotement,
**caractérisé en ce que** le dispositif de configuration de ligne de production est une machine de fabrication de sacs et d'emballage comprenant l'exécution, par la partie fonctionnelle, d'une opération relative à au moins un de la fabrication de sacs et de l'emballage, la partie fonctionnelle comprenant un appareil de chauffage (331), une bande chauffante chauffée par l'appareil de chauffage, et une partie d'entraînement assurant l'entraînement par rotation de la bande chauffante, et la partie de changement (600) changeant, en tant que valeur de consigne, au moins une d'une valeur indiquant une température de l'appareil de chauffage et une valeur indiquant une vitesse de rotation de la bande chauffante.

3. Dispositif de configuration de ligne de production assurant la configuration d'une ligne de production pour un produit, comprenant :
une partie fonctionnelle (200, 300, 400) effectuant une opération relative à la production du produit ;
une partie de manipulation tactile (500) acceptant une entrée via une manipulation tactile par un utilisateur ; et
une partie de changement (600) changeant une valeur de consigne dans la partie fonctionnelle en fonction d'une méthode pour la manipulation tactile,
la manipulation tactile étant une manipulation par effleurement, une manipulation par glissement, ou une manipulation par tapotement,
**caractérisé en ce que** le dispositif de configuration de ligne de production est une machine de fabrication de sacs et d'emballage comprenant l'exécution, par la partie fonctionnelle, d'une opération relative à au moins un de la fabrication de sacs et de l'emballage,
la partie fonctionnelle comprenant un appareil d'impression imprimant sur une pellicule, et
la partie de changement (600) changeant, en tant que valeur de consigne, une valeur indiquant une position d'impression relativement à la pellicule.

4. Dispositif de configuration de ligne de production selon une quelconque des revendications 1 à 3,
la manipulation tactile comprenant une manipulation par effleurement, et
la partie de changement (600) changeant la valeur de consigne en fonction d'un sens de coulissement d'un doigt de l'utilisateur au cours de la manipulation par effleurement.

5. Dispositif de configuration de ligne de production selon la revendication 4,
la partie de changement (600) changeant la valeur de consigne sur une valeur différente selon que le sens du coulissement est vers la gauche ou que le sens du coulissement est vers la droite.

6. Dispositif de configuration de ligne de production selon la revendication 4 ou 5,
la partie de changement (600) changeant la valeur de consigne sur une valeur différente selon que le sens du coulissement est vers le haut ou que le sens du coulissement est vers le bas.

7. Dispositif de configuration de ligne de production selon une quelconque des revendications 1 à 6,
la manipulation tactile comprenant une manipulation par tapotement, et
la partie de changement (600) changeant la valeur de consigne en fonction du nombre d'exécutions de manipulations par tapotement au cours d'une période préétablie.

8. Dispositif de configuration de ligne de production selon une quelconque des revendications 1 à 7,
la partie de changement (600) changeant la valeur de consigne en fonction du nombre de parties d'un panneau tactile appuyées simultanément par l'utilisateur.
